Europäisches Patentamt

European Patent Office

Office européen des brevets

(19)

(11) Veröffentlichungsnummer: **0 502 454 A1**

## (12) EUROPÄISCHE PATENTANMELDUNG

(21) Anmeldenummer: **92103528.3**

(22) Anmeldetag: **02.03.92**

(51) Int. Cl.5: **B22C 7/02**, B29C 65/48, B29C 65/02, B29K 105/04

(30) Priorität: **05.03.91 DE 4107003**

(43) Veröffentlichungstag der Anmeldung:
**09.09.92 Patentblatt 92/37**

(84) Benannte Vertragsstaaten:
**AT BE CH DE DK ES FR GB GR IT LI LU MC NL PT SE**

(71) Anmelder: **KÜNKEL-WAGNER GMBH & CO.KG
Hannoversche Strasse 59
W-3220 Alfeld (Leine)(DE)**

(72) Erfinder: **Schaarschmidt, Ekart Dr.-Ing.
Bergstrasse 7
W-3220 Alfeld(de)**

(74) Vertreter: **Fricke, Joachim, Dr. et al
Dr.-Ing. R. Döring, Dipl.- Phys. Dr. J. Fricke,
Dipl.-Phys. M. Einsel Josephspitalstrasse 7
W-8000 München 2(DE)**

(54) Zwei- oder mehrteiliges Modell aus geschäumtem Kunststoff zur Verwendung bei Vollformgiessverfahren und Verfahren zu seiner Herstellung.

(57) Es ist ein zwei- oder mehrteiliges Modell aus geschäumtem Kunststoff zur Verwendung bei Vollformgießverfahren vorgesehen, bei dem in der Nahtkontaktfläche des einen Modellteils mittig eine entlang der Kontaktfläche verlaufende Nut (5) vorgesehen ist, in die zentriert eine vorbestimmte Menge an Kleber dosiert eingebracht wird. Die Mengen und Abmessungen und der Fügedruck werden so gewählt, da- die Modellteile (1,2) an den Rändern der Kontaktflächen (3,4) direkt in Kontakt treten und leicht zur Abdichtung der Nut verquetscht werden und sich der Kleber nur innerhalb des Breitenbereiches der Nut über die Kontaktflächen ausbreiten kann.

Fig 1

Die Erfindung betrifft ein zwei- oder mehrteiliges Modell aus geschäumtem Kunststoff zur Verwendung bei Vollformgießverfahren mit den Merkmalen des Oberbegriff des Anspruchs 1 sowie ein Verfahren zum Herstellen eines solchen Modelles mit den Merkmalen des Oberbegriffs des Anspruchs 8.

Das Vollformgießverfahren mit beim Gießen vergasbaren, mehrteiligen Modellen aus geschäumtem Kunststoff ist bekannt. Die Modellteile werden für sich hergestellt und vor dem Einbringen in einen Formbehälter mit Hilfe eines fließfähigen Klebers dicht und fest verbunden. Die Kontaktflächen der Modellteile sind relativ schmal und liegen oft zwischen 2 und 6, vorzugsweise im Bereich zwischen 2,5 und 5 mm. Um eine feste und dichte Verbindung zu erzielen müssen die Modellteile mit einer Schablone zusammengefügt werden, wobei die Schablone solange geschlossen bleibt, bis der Kleber verfestigt ist. Dies führt häufig dazu, daß sich in der Teilungsebene beiderseits der Verbindungsstelle mehr oder weniger starke Kleberwülste ausbilden, die entsprechende Wülste auch an den Gußstücken zur Folge haben. Soweit dies von außen möglich ist, müssen diese Nahtwülste an den Gußstücken abgearbeitet werden. Bei komplizierteren Gußstücken müssen innenliegende Nahtwülste jedoch belassen werden, so daß sie den lichten Querschnitt von Strömungswegen in dem Gußstück und das Fließverhalten beeinträchtigen. Hierdurch werden die Einsatzmöglichkeiten des Vollformgießverfahrens begrenzt.

Es ist Aufgabe der Erfindung hier Abhilfe zu schaffen und die in Frage stehenden Modelle so weiterzubilden, daß auf der einen Seite eine feste und dichte Zusammenfügung der Modellteile gewährleistet ist, auf der anderen Seite aber die Ausbildung von Nahtwülsten an nach dem Vollformgießverfahren hergestellten Gußstücken praktisch vollständig vermieden werden kann.

Diese Aufgabe wird durch die Lehre des Anspruchs 1 gelöst.

Es ist ferner Aufgabe der Erfindung ein einfaches und zuverlässiges Verfahren zur Herstellung eines solchen Modelles anzugeben. Diese Aufgabe wird durch die Lehre des Anspruchs 8 gelöst.

Es hat sich gezeigt, daß trotz der geringen Breite der Kontaktbereiche zwischen den Modellteilen eine entlang der Kontaktfläche mittig verlaufende Nut vorbestimmter Querschnittsform und vorbestimmter Querschnittsabmessungen zuverlässig und mit großer Genauigkeit vorgesehen werden kann. Es ist auch ohne weiteres möglich, eine auf Form und Querschnitt der Nut genau angepaßte Menge an Kleber in die Nut so einzubringen, daß die Nutränder bzw. die Längskantenbereiche der Kontaktfläche beim Einbringen des Klebers frei von dem Kleber bleiben.

Eine solche Nut kann in beiden zusammenwirkenden Kontaktflächen der Modellteile vorgesehen sein. Bevorzugt wird jedoch die Ausbildung einer Nut nur in einer der beiden Kontaktflächen.

Werden nun unter vorbestimmtem Fügedruck nach Einbringen des Klebers die Modellteile unter Berührung ihrer Kontaktflächen zusammengebracht, so berühren sich die Modellteile direkt, d.h. ohne Zwischenschaltung eines Klebers entlang der Längsränder der Kontaktflächen. Durch den Fügedruck werden diese Längskantenbereiche leicht verformt oder gequetscht, so daß sich beiderseits des Nahtbereiches ein schwacher Grat aus dem Schaumstoff bildet, der jedoch im Vergleich zu den bisher entstehenden Kleberwülsten vernachlässigbar kleine Abmessungen aufweist. Durch das Quetschen der Kantenbereiche der Kontaktflächen wird der durch die Nut gebildete Hohlraum nach außen abgedichtet. Gleichzeitig wird der in diesem Hohlraum befindliche Kleber zwischen den Kontaktflächen unter leichten Druck gesetzt, so daß er sich weitgehend über die in dem Hohlraum freiliegenden Bereiche der Kontaktflächen ausbreitet und so bei Verfestigen eine sichere und dichte Verbindung zwischen den Kontaktflächen herstellt. Die Klebermenge ist beim Einbringen in die Nut in Bezug auf den angewendeten Fügedruck und das Volumen der Nut so bemessen, daß die schwache Quetschung der Kantenbereiche ein Austreten des Klebers zuverlässig ausschaltet.

Die Querschnittsform der Nut kann variieren, wobei jedoch eine sichere und zentrierte Einbringung des Klebers begünstigt und eine Verteilung des Klebers unter dem Fügedruck über die Kontaktfläche in Richtung quer zum Verlauf der Kontaktfläche gewährleistet werden soll.

Die Erfindung wird nachfolgend anhand schematischer Zeichnungen an mehreren Ausführungsbeispielen näher erläutert.

Es zeigen:

Figur 1    schematisch in perspektivischer Ansicht und im Ausschnitt zwei zusammenzufügende Modellteile aus geschäumtem Kunststoff;

Figur 2    im größeren Maßstabe und im Querschnitt die Kontaktflächen der beiden Modellteile nach Einbringen des Klebers und vor dem Zusammenfügen der Teile;

Figur 3    in ähnlicher Darstellung wie Figur 2 die Modellteile nach dem Zusammenfügen;

Figur    4 die Einbringung des Klebers in die Nut mit Hilfe eines gesteuerten Düsenarmes und

Figur 5    die Einbringung des Klebers in die Nut von unten mit Hilfe eines Auftragsteges.

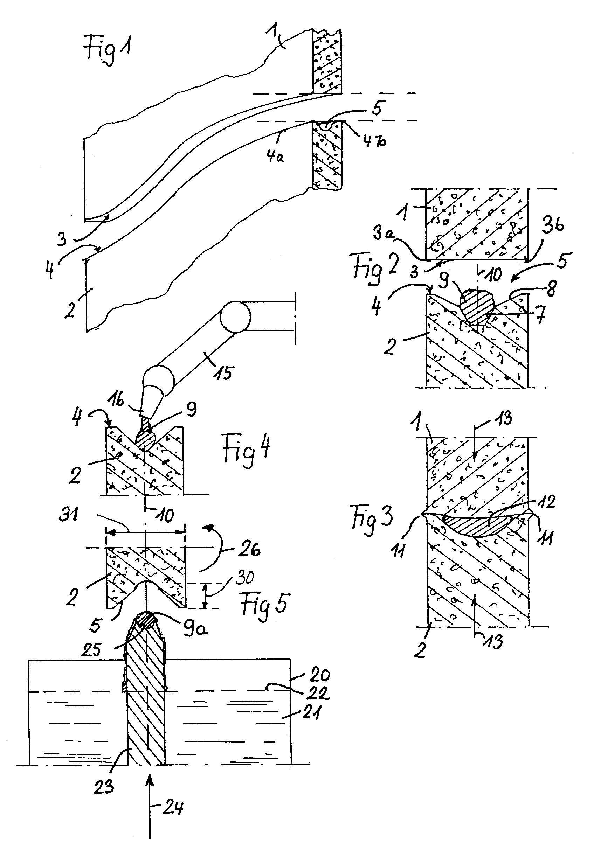

Aus Figur 1 ist ersichtlich, daß die Kontaktbereiche zwischen den Modellteilen 1 und 2 häufig schmale Kontaktflächen 3 und 4 sind, die in einer Ebene liegen, aber auch mehr oder weniger beliebig im Raum verlaufen können. Die Wanddicke der Modellteile und damit die Breite der Kontaktbereiche kann bei 2,5 bis 3 mm liegen. Sie kann davon aber auch abweichen.

Bei der Ausführung nach Figur 1 ist in der Kontaktfläche 4 des unteren Modellteils 2 entlang der Kontaktfläche und mittig dazu eine Nut 5 vorgesehen. Eine solche Nut könnte auch in der Kontaktfläche 3 vorgesehen sein. Bevorzugt wird jedoch eine Nut nur in einer der beiden zusammenwirkenden Kontaktflächen 3 und 4 angeordnet. Die Nut ist zweckmäßigerweise so ausgebildet, daß die Längsrand- oder Kantenbereiche 4a, 4b der Kontaktfläche 4 in der ursprünglichen Fläche liegen, d.h. die Ränder der Nut 5 in einem Abstand von den Kanten 4a, 4b verlaufen. Die Nut ist relativ flach und ihre Tiefe 30 (Fig. 5) sollte nicht größer als die Breite 31 der Kontaktfläche sein.

Es ist auch vorteilhaft, wenn die Flanken der Nut 5 gegenüber der senkrechten Mittelebene 10 der Nut unter einem relativ großen Winkel, vorzugsweise größer als 45° verlaufen. Dabei kann die Neigung sich vom Nutengrund nach außen hin kontinuierlich oder wie in Figur 2 bei 7 und 8 dargestellt, stufenweise unter Vergrößerung des Winkels zwischen dem Flankenbereich und der Längsmittelebene 10 verändern.

In die Nut 5 wird eine vorbestimmte Menge an einem fließfähigen Kleber 9 eingebracht. Die Dosierung erfolgt in Abhängigkeit von dem Querschnittsvolumen der Nut und dem Druck, mit dem beim Verbinden der Modellteile diese zusammengefügt werden. Der Zusammenhang zwischen Fügedruck und Volumen der Nut sowie Menge des Klebers wird am besten aus Figur 3 deutlich. Hier ist der Fügedruck durch die Pfeile 13 angedeutet. Dieser wird so bemessen, daß sich die kleberfrei berührenden Längskanten 3a, 3b und 4a, 4b unter dem Fügedruck leicht verformen, so daß sich ein schwacher, nur in 10tel mm zu messender Grat 11 entlang des Fügebereiches ergibt. Die Quetschung der Längskanten der Kontaktbereiche unter dem Fügedruck wird so begrenzt, daß einerseits der Grat 11 vernachlässigbar klein bleibt, auf der anderen Seite in den Längskantenbereichen eine Abdichtung der Nut nach außen erfolgt, so daß der sich unter dem Fügedruck ausbreitende Kleber nicht durch die gequetschten Kantenbereiche nach außen treten kann. Auf der anderen Seite wird durch den Fügedruck und die Verformung die vorbestimmte Klebermenge im Querschnitt so verteilt, daß der Kleber im Querschnitt den überwiegenden Teil der Kontaktflächen fest und dicht miteinander verbindet.

Eine genaue Dosierung und Zentrierung des Klebers 9 in der Nut 5 kann mit Hilfe eines gesteuerten Auftragarmes 15 erfolgen, der entlang der Nut bewegt wird und den Kleber über eine Düse 16 dosiert und zentriert in die Nut einbringt.

Es ist jedoch auch möglich den mit der Nut in der Kontaktfläche versehenen Modellteil 2 mit der Nut nach unten über einem Kleberbad 21 anzuordnen, das sich mit vorbestimmtem Höhenstand 22 in einem Kleberbehälter 20 befindet. In diesem ist heb- und senkbar ein dem Verlauf der Kontaktfläche 4 und der Nut 5 entsprechend gebildeter Auftragsteg oder ein Stegsystem 23 vorgesehen. Der Steg weist auf seiner nach oben weisenden Stirnfläche eine schwache Nut 25 oder dergleichen auf. Der Steg wird bis unter die Oberfläche 22 des Kleberbades abgesenkt und nach Anordnen eines Modellteils 2 über dem Bad angehoben, so daß er mittels seiner Nut 25 eine vorbestimmte Menge Kleber 9a mit nach oben nimmt und bei Kontakt mit dem Nutgrund in die Nut einbringt. Die Bemessung des Steges 23 und der Nut 25 richtet sich nach der Breite der Fügefläche und der Tiefe der Nut 5 und nach der Art des Klebers.

Nach dem Auftragen des Klebers wird der Modellteil 2 entsprechend dem Pfeil 26 gewendet und in der Weise, wie dies anhand der Figuren 2 und 3 beschrieben ist, mit einem anderen Modellteil zusammengefügt.

**Patentansprüche**

1. Zwei- oder mehrteiliges Modell aus geschäumtem Kunststoff zur Verwendung bei Vollformgießverfahren, bei dem die, insb. schalenförmigen, Modellteile in den Kontaktbereichen entlang der Teilungsfläche mittels eines fließfähigen Klebers fest und dicht miteinander verbunden sind, dadurch **gekennzeichnet**, daß entlang der Kontaktbereiche (3,4) und im Abstand von den beiden Längskanten dieser Kontaktbereiche eine Nut (5) ausgebildet ist und der fließfähige Kleber (9) in dieser Nut vorgesehen ist.

2. Modell nach Anspruch 1, dadurch **gekennzeichnet**, daß die Modellteile (1,2) unter Druck so zusammengefügt sind, daß die Kontaktflächen (3,4) nur entlang ihrer Längskantenbereiche (3a,3b,4a,4b) zur Abdichtung gegen Kleberaustritt schwach gequetscht (11) miteinander verbunden sind.

3. Modell nach Anspruch 1 oder 2, dadurch **gekennzeichnet**, daß die Nut (5) im entspannten Zustand einen etwa V- oder trichterförmigen Querschnitt aufweist.

4. Modell nach Anspruch 3, dadurch **gekennzeichnet**, daß die geneigten Flankenbereiche (7,8) der Nut (5) mit der senkrechten Mittelebene (10) der Nut einen Winkel von mindestens 45° einschließen.

5. Modell nach Anspruch 4, dadurch **gekennzeichnet**, daß die Flanken (7,8) der Nut (5) einen nach außen - vorzugsweise gestuft - zunehmenden Winkel mit der senkrechten Mittelebene (10) der Nut (5) einnehmen.

6. Modell nach einem der Ansprüche 1 bis 5, dadurch **gekennzeichnet**, daß die Tiefe (30) der Nut (5) maximal der halben Breite (31) der Kontaktfläche (3 bzw. 4) entspricht.

7. Modell nach einem der Ansprüche 1 bis 6, dadurch **gekennzeichnet**, daß nur in einer der beiden zusammenwirkenden Kontaktbereiche (3,4) eine Nut (5) vorgesehen und der andere als ebene und zur senkrechten Mittelebene (10) der Nut (5) senkrechte Fläche ausgebildet ist.

8. Verfahren zum Herstellen eines zwei- oder mehrteiligen Modells aus geschäumtem Kunststoff nach Anspruch 1, bei dem auf wenigstens einen der beiden zusammenwirkenden Kontaktbereiche der Modellteile ein fließfähiger Kleber aufgetragen und die Modellteile unter Druck zusammengefügt werden, bis der Kleber verfestigt ist, dadurch **gekennzeichnet**, daß entlang des Konaktbereiches eine Nut etwa mittig eingearbeitet, der Kleber etwa mittig in die Nut eingebracht und so bemessen wird, daß bei einem vorbestimmten Fügedruck nur die Längskantenbereiche der Kontaktflächen unter Abdichtung gegen einen Durchtritt des Klebers gegeneinander gepreßt werden.

9. Verfahren nach Anspruch 8, dadurch **gekennzeichnet**, daß der Kleber mittels eines gesteuerten Auftragarmes über eine Düse mittig in die Nut dosiert eingebracht wird.

10. Verfahren nach Anspruch 8, dadurch **gekennzeichnet**, daß der Kleber mittels eines in einem Kleberbad eintauchbaren und demgegenüber anhebbarem Auftragsteges in den Nutengrund dosiert aufgebracht wird.

Fig 1

Fig 2

Fig 3

Fig 4

Fig 5

Europäisches
Patentamt

**EUROPÄISCHER RECHERCHENBERICHT**

Nummer der Anmeldung

EP    92 10 3528

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 635 280 (PARSONS) 18. Januar 1972<br>* Spalte 1, Zeile 45 - Zeile 72 *<br>* Abbildungen *<br>--- | 1-10 | B22C7/02<br>B29C65/48<br>B29C65/02<br>B29K105/04 |
| X | EP-A-0 316 237 (ASSOCIATION POUR LA RECHERCHE ET LE DEVELOPPEMENT DES METHODES ET PROC) 17. Mai 1989<br>* Zusammenfassung *<br>* Abbildungen *<br>--- | 1-10 | |
| X | DE-A-2 421 936 (SPEIDEL-KUNSTSTOFFWERK KG) 20. November 1975<br>* Anspruch 1 *<br>* Abbildungen 4-7 *<br>--- | 1-10 | |
| X | DE-U-8 612 217 (HR-PLASTIK BERATUNGSBÜRO GMBH) 2. Oktober 1986<br>* Abbildungen *<br>* Anspruch 1 *<br>* Seite 1, Zeile 9 - Seite 3, Zeile 15 *<br>--- | 1-8 | |
| A | US-A-3 400 030 (BURGER) 3. September 1968<br>* Anspruch 1 *<br>* Abbildungen 4-10 *<br>--- | 2 | **RECHERCHIERTE SACHGEBIETE (Int. Cl.5)**<br><br>B22C<br>B29C |
| A | PATENT ABSTRACTS OF JAPAN<br>vol. 4, no. 171 (M-44)(653) 26. November 1980<br>& JP-A-55 122 648 ( KUBOTA TEKKO ) 20. September 1980<br>* Zusammenfassung *<br><br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 10 JUNI 1992 | M. Riba Vilanova |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................................
& : Mitglied der gleichen Patentfamilie, übereinstimmendes
    Dokument